# EUROPEAN PATENT APPLICATION

(11) **EP 2 323 069 A2**
(43) Date of publication of application: **18.05.2011**
(21) Application number: 10190146.0
(22) Date of filing: 05.11.2010
(51) Int. Cl.: G06K 9/00, G06K 9/46, G06F 17/30

(54) **Method, device and system for content based image categorization field**

(30) Priority: 17.11.2009 IN CH28182009; 18.05.2010 KR 20100046607
(71) Applicant: Samsung Electronics Co., Ltd., Suwon-si, Gyeonggi-do (KR)
(72) Inventor: Dhall, Abhinav, Punjab (IN); Sharma, Gaurav, 110023, New Delhi (IN); Chaudhury, Shantanu, 110016, New Delhi (IN); Bhatt, Rajen B., 360007, Rajkot (IN)
(74) Representative: Hewett, Jonathan Michael Richard

(57) **Abstract**

A method and system for content based image categorization is provided. The method includes: identifying one or more regions of interest from a plurality of images, in which each image is associated with a category; extracting a plurality of pixels from the one or more regions of interest and determining a plurality of color values for the plurality of pixels; grouping the plurality of color values in a codebook corresponding to the respective category; indexing the plurality of pixels based on the plurality of color values; creating a classifier for the plurality of color values using a support vector machine.

## Description

The present invention relates to image processing, and more particularly to a method, device and a system for content based image categorization.

Currently, image processing applications are used to categorize images. Existing techniques, such as scale invariant feature transform (SIFT), perform categorization by using point detector based representations of images. However, representing multiple points involves complex processing functions thereby imposing hardware limitations for utilizing the technique.

Further, in images having varied subjects, multiple point detectors are used to identify the subjects. However, using multiple point detectors leads to a higher memory requirement and processing cost.

In light of the foregoing, there is a need for a method and system for content based image categorization to reduce a processing time and improve an accuracy of image categorization.

Exemplary embodiments of the present invention described herein provide a method, device and system for content based image categorization.

According to an aspect of the present invention, there is provided a method for content based image categorization including: identifying one or more regions of interest from a plurality of images, each image being associated with a category; extracting a plurality of pixels from the one or more regions of interest in the plurality of images; determining a plurality of color values for the plurality of pixels in the one or more regions of interest; grouping the plurality of color values in a codebook corresponding to the categories; indexing the plurality of pixels based on the plurality of color values; creating a classifier for the plurality of color values using a support vector machine, wherein the plurality of images are classified according to categories using the classifier and displayed.

According to another aspect of the present invention, there is provided an electronic device including: a communication interface which receives a plurality of images having a plurality of categories; a processor which identifies at least one region of interest from the plurality of images, extracts a plurality of pixels from the at least one region of interest, and processes the plurality of images to be classified according to categories on the basis of a plurality of color values determined for the plurality of extracted pixels; and a display unit which displays the plurality of images classified according to the categories.

According to another aspect of the present invention, there is provided a system for content based image categorization includes an electronic device, the electronic device including: a communication interface which receives a plurality of images that are associated with categories; a memory which stores information; a processor which processes the information and includes an identification unit which identifies one or more regions of interest from the plurality of images; an extraction unit which extracts a plurality of pixels from the one or more regions of interest; a determination unit which determines a plurality of color values for the plurality of pixels in the one or more regions of interest; a grouping unit which groups the plurality of color values in a codebook corresponding to the categories; an index unit which indexes the plurality of pixels based on the plurality of color values; a classification unit which creates a classifier for the plurality of color values using a support vector machine.

According to another aspect of the present invention, there is provided a method for image categorization of an electronic device, the method including: receiving an image to be categorized; indexing a plurality of pixels of the received image on the basis of a plurality of color values; and obtaining a category of the received image using a classifier based on the indexing, wherein the classifier identifies the category of the received image using correlogram vectors associated with the category.

In the accompanying figures, similar reference numerals may refer to identical or functionally similar elements. These reference numerals are used in the detailed description to illustrate various exemplary embodiments and to explain various aspects of the exemplary embodiments, in which:
FIG. 1 is a block diagram of a system for content based image categorization, according to an exemplary embodiment;
FIGs. 2A and 2B are flow charts illustrating a method for content based image categorization, according to an exemplary embodiment; and
FIGs. 3A and 3B are exemplary illustrations of categorizing multiple images, according to an exemplary embodiment.

Persons skilled in the art will appreciate that elements in the figures are illustrated for simplicity and clarity and may have not been drawn to scale. For example, the dimensions of some of the elements in the figures may be exaggerated relative to other elements to help to improve an understanding of various exemplary embodiments.

It should be observed that method steps and system components have been represented by symbols in the figures, showing only specific details that are relevant for an understanding of the exemplary embodiments. Further, details that may be readily apparent to persons ordinarily skilled in the art may not have been disclosed. In the present disclosure, relational terms such as first and second, and the like, may be used to distinguish one entity from another entity, without necessarily implying any actual relationship or order between such entities. Expressions such as "at least one of," when preceding a list of elements, modify the entire list of elements and do not modify the individual elements of the list

Exemplary embodiments described herein provide a method and system for content based image categorization.

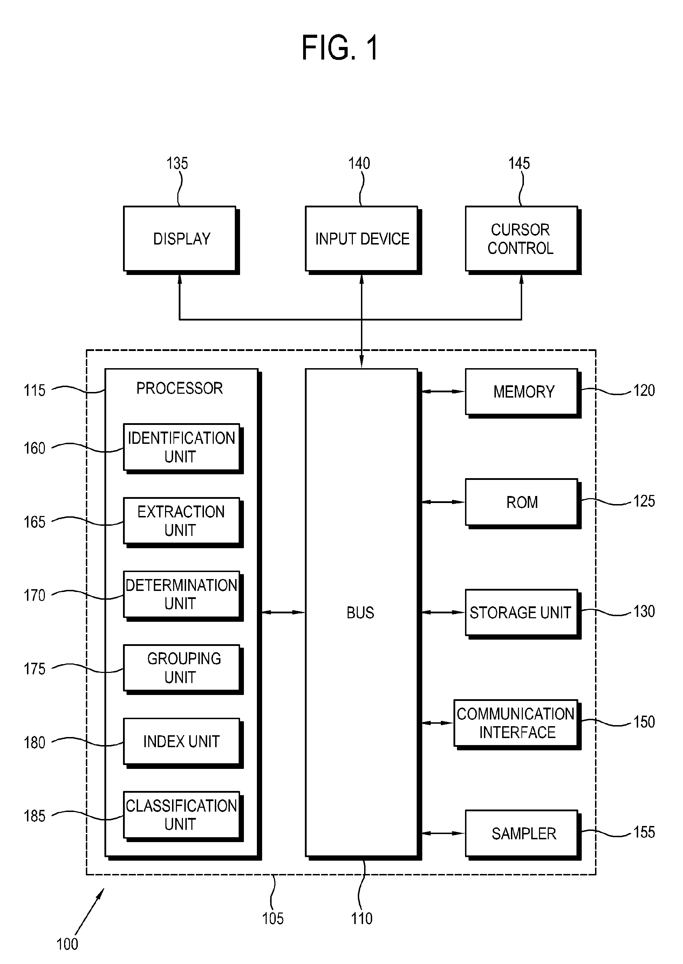

FIG. 1 is a block diagram of a system 100 for content based image categorization, according to an exemplary embodiment. Referring to FIG. 1, the system 100 includes an electronic device 105. Examples of the electronic device 105 include, but are not limited to, a computer, a laptop, a mobile device, a hand held device, a personal digital assistant (PDA), a video player, a workstation, etc.

The electronic device 105 includes a bus 110 for communicating information, and a processor 115 coupled with the bus 110 for processing information. The electronic device 105 also includes a memory 120, such as a random access memory (RAM), coupled to the bus 110 for storing information used by the processor 115. The memory 120 may be used for storing temporary information used by the processor 115. The electronic device 105 further includes a read only memory (ROM) 125 coupled to the bus 110 for storing static information used by the processor 115. A storage unit 130, such as a magnetic disk, a hard disk drive, an optical disk, etc., can be provided and coupled to bus 110 for storing information.

The electronic device 105 can be coupled via the bus 110 to a display 135, such as a cathode ray tube (CRT), a liquid crystal display (LCD), a plasma display panel, an organic light emitting diode display, etc., for displaying information. An input device 140, including various keys, is coupled to the bus 110 for communicating information to the processor 115. In some exemplary embodiments, cursor control 145, such as a mouse, a trackball, a joystick, cursor direction keys, etc., for communicating information to the processor 115 and for controlling cursor movement on the display 135 can also be present in the system 100.

Furthermore, in an exemplary embodiment, the display 135 may perform the functions of the input device 140. For example, the display 135 may be a touch screen display operable to receive haptic inputs. A user can then use a stylus, a finger, etc., to select one or more portions on the visual image displayed on the touch screen device.

Moreover, in an exemplary embodiment, the electronic device 105 performs operations using the processor 115. The information can be read into the memory 120 from a machine-readable medium, such as the storage unit 130. In another exemplary embodiment, hard-wired circuitry can be used in place of or in combination with software instructions to implement various exemplary embodiments.

The term machine-readable medium can be defined as a medium providing data to a machine to enable the machine to perform a specific operation. The machine-readable medium can be a storage medium from among storage media. The storage media can include non-volatile media and volatile media. For example, the storage unit 130 can be a non-volatile medium, and the memory 120 can be a volatile medium. All such media are tangible to enable the instructions carried by the media to be detected by a physical mechanism that reads the instructions into the machine.

Examples of the machine readable medium includes, but are not limited to, a floppy disk, a flexible disk, hard disk, magnetic tape, a CD-ROM, optical disk, punchcards, papertape, a RAM, a PROM, EPROM, a FLASH-EPROM, etc.

The machine readable medium can also include online links, download links, and installation links providing the information to the processor 115.

The electronic device 105 also includes a communication interface 150 coupled to the bus 110 for enabling data communication. Examples of the communication interface 150 include, but are not limited to, an integrated services digital network (ISDN) card, a modem, a local area network (LAN) card, an infrared port, a Bluetooth port, a zigbee port, a wireless port, etc.

Further, the electronic device 105 includes a sampler 155 for mapping each pixel from among pixels to color values using a vector quantization technique. The sampler also creates an offset for the mapped pixels, the offset corresponding to the color values in a codebook.

In an exemplary embodiment, the processor 115 includes one or more processing units for performing one or more functions of the processor 115. The processing units are hardware circuitry performing specified functions.

Also, the processor includes an identification unit 160 for identifying one or more regions of interest from images. Each image from among the images is associated with a category. The processor also includes an extraction unit 165 for extracting includes a determination unit 170 for determining color values for the pixels in the one or more regions of interest. Moreover, the processor also includes a grouping unit 175 for grouping the color values in a codebook corresponding to the category. Additionally, the processor includes an index unit 180 for indexing each pixel from among the pixels based on the color values. Furthermore, the processor also includes a classification unit 185 for creating a classifier for the color values using a support vector machine.

In an exemplary embodiment, the communication interface 150 receives an image to be categorized. Moreover, in an exemplary embodiment, the index unit 180 indexes each pixel of the image based on the color values. Also, in an exemplary embodiment, the classification unit 185 obtains the category of the image using the classifier.

The storage unit 130 stores the codebook corresponding to the color values.

According to another exemplary embodiment, an electronic device includes: a communication interface to receive a plurality of images having a plurality of categories from an exterior; a processor to identify at least one region of interest from the plurality of images, to extract a plurality of pixels from the at least one region of interest, and to process the plurality of images to be classified according to categories on the basis of a plurality of color values determined for the plurality of extracted pixels; and a display unit to display the plurality of images classified according to the categories.

The electronic device may include any display unit for displaying an image. For example, the electronic device may include a television (TV), a digital television (DTV), an Internet protocol television (IPTV), a personal computer (PC), a mobile PC (a netbook computer, a laptop computer, etc.), a digital camera, a personal digital assistant (PDA), a portable multimedia player (PMP), a smart phone, a camcorder, a video player, a digital album, a game console, etc.

The image includes an image previously stored in the processor or an image received from the exterior through the communication interface (to be described later).

The processor identifies the at least one region of interest from the plurality of images, extracts the plurality of pixels from the at least one region of interest, and processes the plurality of images to be classified according to the categories on the basis of the plurality of color values determined for the plurality of extracted pixels. For example, the processor includes the identification unit 160, the extraction unit 165, the determination unit 170, the grouping unit 175, the index unit 180, and the classification unit 185, as described above.

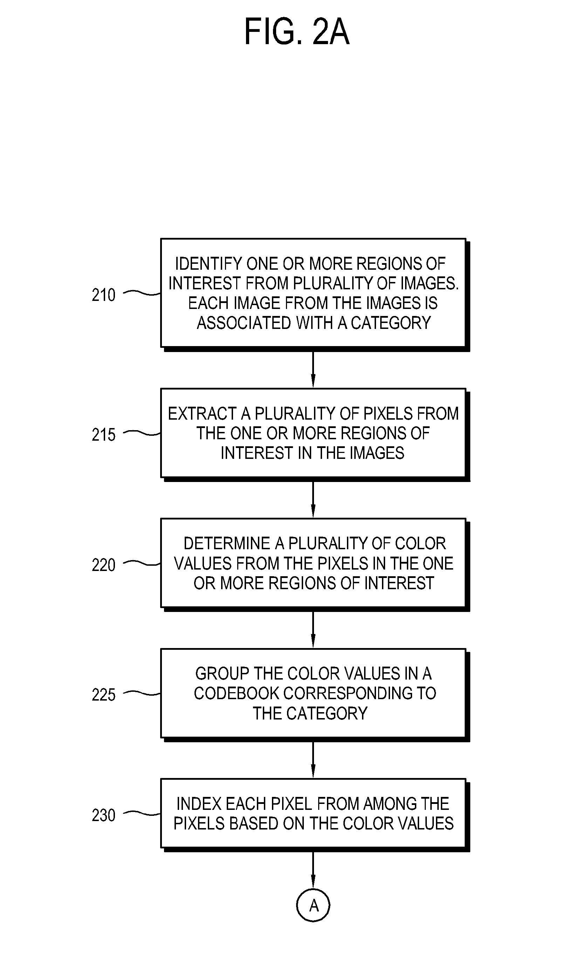

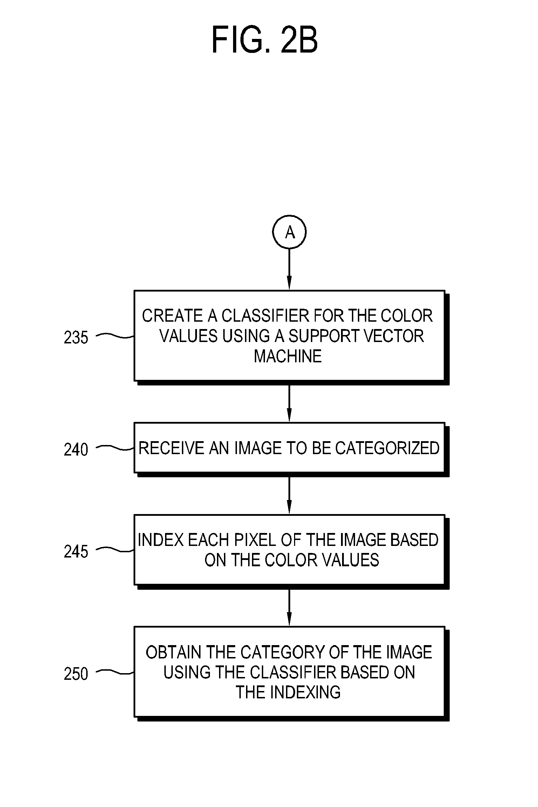

FIGs. 2A and 2B are flow charts illustrating a method for content based image categorization, according to an exemplary embodiment. The method describes a training process for a classifier and performing of categorization based on the training. A plurality of images are used during the training process. The images are associated with one or more categories. Multiple images can be associated with each of the categories.

Referring to FIGs. 2A and 2B, at operation 210, one or more regions of interest (ROI) are identified from the plurality of images. Each image from among the plurality of images is associated with a category from among a plurality of categories. Based on the category of each image, multiple ROIs may be identified. In an exemplary embodiment, the ROIs may be identified by a user.

At operation 215, a plurality of pixels is extracted from the one or more ROIs in the images.

At operation 220, a plurality of color values for the plurality of pixels in the one or more ROIs are determined. The color values are based on color models, and each color value is represented using a color correlogram vector. Examples of the color model can include, but are not limited to, a red green blue (RGB) model, a lumachrominance model (YCbCr), hue saturation value (HSV) color model, cyan, magenta, yellow and black (CMYK) model, etc. For example, in the RGB model, the RGB color values are determined from the extracted pixels. The color values are represented using a three-dimensional (3D) vector corresponding to the R, G and B colors.

At operation 225, the color values are grouped in a codebook corresponding to the respective category. Each grouping corresponds to a single category that can include the color values from the multiple ROIs.

At operation 230, each pixel from among the plurality of pixels are indexed based on the color values. Here, each pixel is mapped to the color values using a vector quantization technique. An offset is created for the mapped pixel, the offset corresponding to the correlogram vector in the codebook. For example, in the RGB color model, the offset can correspond to the 3D vector representing the color value.

In an exemplary embodiment, the indexing reduces the number of colors in each image and hence size of the image is reduced.

At operation 235, a classifier is created for the color values using a support vector machine (SVM). The classifier identifies a category of images using the correlogram vectors associated with the category. A set of parameters may be defined by the classifier using the correlogram vectors that identifies the category of the images. The SVM constructs a hyper plane or a set of hyper planes in a high or infinite dimensional space that can be used for classifying the images along with the correlogram vectors.

In some exemplary embodiments, an optimization process can be performed for the classifier using an n-fold cross validation technique.

At operation 240, an image is received that is to be categorized.

At operation 245, each pixel of the image is indexed based on the color values. Each pixel of the image is mapped to the color values using the vector quantization technique. The offset is created for the mapped pixel, the offset corresponding to the correlogram vector in the codebook.

At operation 250, the category of the image is obtained using the classifier by identifying the category associated with the correlogram vector.

In an exemplary embodiment, multiple correlogram vectors are used for obtaining the category of the image.

In some exemplary embodiments, the method can be realized using at least one of a linear SVM classifier and a polynomial classifier.

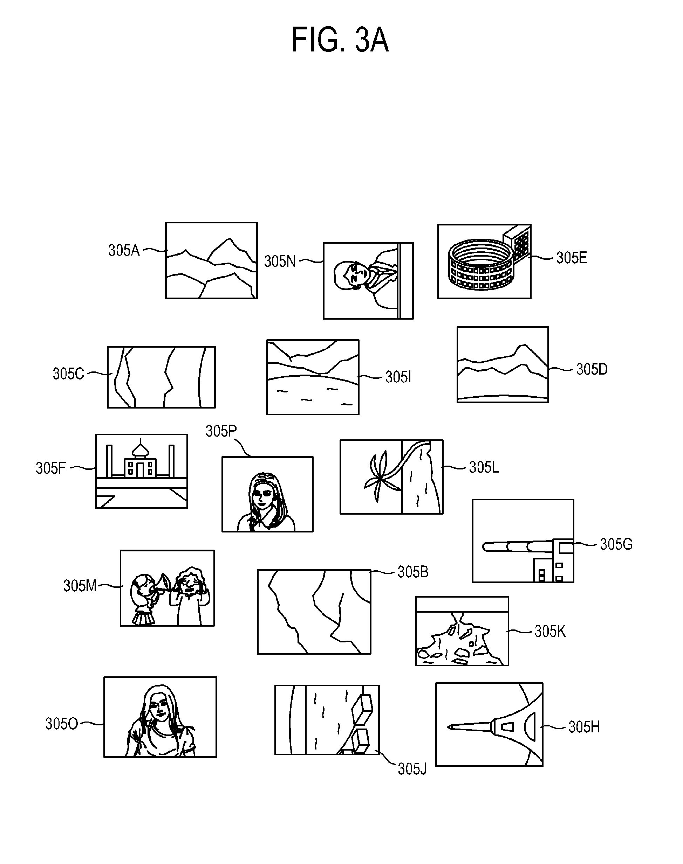

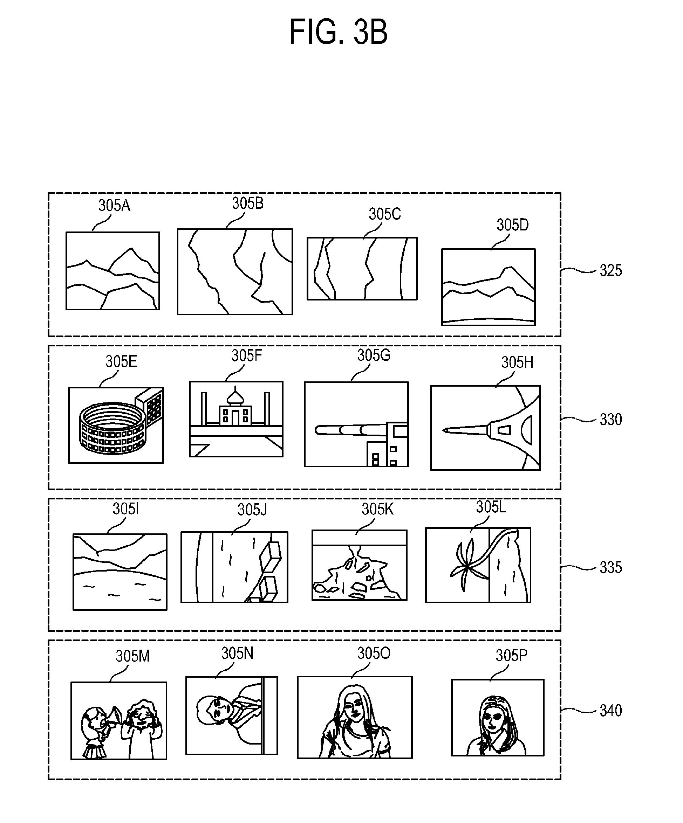

FIGs. 3A and 3B are exemplary illustrations of categorizing multiple images, according to an exemplary embodiment. Referring to FIGs. 3A and 3B, a plurality of images 305A, 305B, 305C, 305D, 305E, 305F, 305G, 305H, 305I, 305J, 305K, 305L, 305M, 305N, 3050, and 305P are to be categorized by the classifier. Here, the images 305B, 305C, 305H, 305G, 305L, 305J, and 305N are rotated by 270 degrees from a viewing angle. In the present exemplary embodiment, the classifier has been associated with categories such as mountains, monuments, water bodies, and portraits.

Each pixel of the plurality of images 305A, 305B, 305C, 305D, 305E, 305F, 305G, 305H, 305I, 305J, 305K, 305L, 305M, 305N, 3050, and 305P is indexed and correlogram vectors associated with each pixel are determined. The classifier then identifies the category associated with the correlogram vectors of each image 305A, 305B, 305C, 305D, 305E, 305F, 305G, 305H, 305I, 305J, 305K, 305L, 305M, 305N, 3050, and 305P. The images of similar categories are grouped together and displayed. For example, the image 305A, the image 305B, the image 305C, and the image 305D are grouped as the mountain category represented by the category 325. The image 305E, the image 305F, the image 305G and the image 305H are grouped as the monument category represented by the category 330. The image 305I, the image 305J, the image 305K and the image 305L are grouped as the water bodies category represented by the category 335. The image 305M, the image 305N, the image 3050 and the image 305P are grouped as the portrait category represented by the category 340.

In the preceding specification, the inventive concept has been described with reference to specific exemplary embodiments. However, it will be apparent to a person of ordinary skill in the art that various modifications and changes can be made, without departing from the scope of the present inventive concept, as set forth in the claims below. Accordingly, the specification and figures are to be regarded as illustrative examples of exemplary embodiments, rather than in restrictive sense. All such possible modifications are intended to be included within the scope of the present inventive concept.

## Claims

1. A method for image categorization of an electronic device, the method comprising:
identifying at least one region of interest from a plurality of images, in which each image of the plurality of images is associated with a respective category;
extracting a plurality of pixels from the at least one region of interest in the plurality of images;
determining a plurality of color values for the plurality of pixels;
classifying the plurality of images according to categories based on the determined plurality of color values; and
displaying the plurality of images classified according to the categories.

2. The method of claim 1, wherein the classifying comprises:
grouping the plurality of color values in a codebook corresponding to the categories;
indexing the plurality of pixels based on the plurality of color values; and
creating a classifier for the plurality of color values using a support vector machine.

3. The method of claim 2, wherein the indexing comprises:
mapping the plurality of pixels to the plurality of color values using a vector quantization technique; and
creating offsets for the mapped plurality of pixels, wherein the offsets correspond to the plurality of color values in the codebook.

4. The method of claim 2, further comprising:
receiving an image to be categorized;
indexing each pixel of the received image based on the plurality of color values; and
obtaining a category of the received image using the classifier based on the indexing.

5. The method of any one of the preceding claims, wherein the plurality of color values are based on color models.

6. The method of any one of the preceding claims, wherein the plurality of color values are represented as color correlogram vectors.

7. The method of claim 2, wherein the classifier identifies a category of an image using correlogram vectors associated with the category.

8. An electronic device comprising:
a communication interface arranged to receive a plurality of images having a plurality of categories;
a processor arranged to identify at least one region of interest from the plurality of images, to extract a plurality of pixels from the at least one region of interest, and to classify the plurality of images according to categories based on a plurality of color values determined for the plurality of extracted pixels; and
a display unit arranged to display the plurality of images classified according to the categories.

9. The electronic device of claim 8, wherein the processor comprises:
an identification unit arranged to identify the at least one region of interest from the plurality of images, in which each image of the plurality of images is associated with a respective category;
an extraction unit arranged to extract the plurality of pixels from the at least one identified region of interest;
a determination unit arranged to determine the plurality of color values for the plurality of extracted pixels;
a grouping unit arranged to group the plurality of color values in a codebook corresponding to the categories;
an index unit arranged to index the plurality of pixels based on the plurality of color values; and
a classification unit arranged to create a classifier for the plurality of color values using a support vector machine.

10. The electronic device of claim 8, further comprising:
a sampler arranged to map the plurality of pixels to the plurality of color values using a vector quantization technique and to create offsets for the mapped plurality of pixels, wherein the offsets correspond to the plurality of color values in the codebook.

11. The electronic device of any one of claims 8 to 10, wherein the plurality of color values are based on color models.

12. The electronic device of any one of claims 8 to 11, wherein the plurality of color values are represented as color correlogram vectors.

13. The electronic device of claim 9, wherein the index unit is arranged to index each pixel of a received image based on a plurality of color values.

14. The electronic device of claim 9, wherein the classification unit is arranged to obtain a category of a received image using the classifier.

15. The electronic device of claim 14, wherein the classifier is arranged to identify the category of the image using correlogram vectors associated with the category.
